# EUROPÄISCHE PATENTSCHRIFT

(11) **EP 0 653 474 B1**
(45) Veröffentlichungstag und Bekanntmachung des Hinweises auf die Patenterteilung: **28.01.1998**
(21) Anmeldenummer: 94115643.2
(22) Anmeldetag: 05.10.1994
(51) Int. Cl.: C09K 3/14, C04B 35/653

(54) **Verfahren zur Herstellung eines Schleifmittels**
Process for making an abrasive
Procédé de préparation d'un abrasif

(30) Priorität: 15.11.1993 DE 4339031
(43) Veröffentlichungstag der Anmeldung: 17.05.1995
(73) Patentinhaber: Treibacher Schleifmittel AG, A-9523 Villach-Landskron (AT)
(72) Erfinder: Zeiringer, Hans, A-9321 Kappel am Krappfeld (AT); Jenz, Peter, Dr., A-9020 Klagenfurt (AT)
(74) Vertreter: Becker, Thomas, Dr., Dipl.-Ing.

(56) Entgegenhaltungen:
- EP-A- 0 171 846
- WO-A-92/02112
- GB-A- 776 435
- US-A- 4 035 162
- DATABASE WPI Week 7815 Derwent Publications Ltd., London, GB; AN 78-27794A & JP-A-53 022 196 (SHOWA DENKO KK) , 1.März 1978
- DATABASE WPI Week 9303 Derwent Publications Ltd., London, GB; AN 93-025347 & SU-A-1 713 888 (UKR SECT ABRASIVE POLISHING) , 23.Februar 1992

## Beschreibung

Die Erfindung betrifft ein Verfahren zur Herstellung eines Schleifmittels auf Basis Korund. Schleifmittel der genannten Art sind seit langem bekannt. Sie können als Pulver (Körnungen) verschiedener Feinheitsgrade Anwendung finden. Mit derartigen Pulvern beschichtete Papiere oder Leinen werden als flexible Schleifmittel bezeichnet. Ebenso können aus den Körnungen Körper, zum Beispiel Schleifscheiben, hergestellt werden, die zur schleifenden Bearbeitung verschiedener Werkstoffe, beispielsweise Metallen, Holz oder dergleichen dienen.

Korund ist in verschiedenen Reinheiten und Zusammensetzungen. bekannt. Sogenannter Normalkorund enthält zwischen 95 und 97 Gew.-% Al₂O₃. Halbedelkorund weist einen Al₂O₃-Gehalt von etwa 98 % auf und wird, wie Normalkorund, überwiegend durch reduzierendes Schmelzen von calcinierten Bauxiten hergestellt. Edelkorunde mit noch höheren Al₂O₃-Gehalten sind wiederum in unterschiedlichen Qualitäten verfügbar. Diese unterscheiden sich zum Beispiel durch Zusätze wie Chromoxid.

Zu den Spezialschleifmitteln zählen die Zirkonkorunde, die im wesentlichen aus Aluminiumoxid und Zirkoniumoxid bestehen.

Zum Beispiel zur Herstellung von Schleifscheiben für den Präzisionsschliff wird auch ein Korund verwendet, der in Einkristallform vorliegt. Ein solcher Einkristall-Korund zeichnet sich durch gute Standzeit bei gleichzeitig kühlem Schleifverhalten aus. Seine Herstellung erfordert jedoch einen erheblichen verfahrenstechnischen Aufwand.

Insoweit liegt der Erfindung die Aufgabe zugrunde, ein Schleifmittel auf Basis Korund zur Verfügung zu stellen, welches sich in einem relativ einfachen Verfahren herstellen läßt und ein Schleifverhalten beziehungsweise eine Schleifleistung aufweist, die mit der für Einkristallkorund vergleichbar sind.

Dabei geht die Erfindung zunächst von der Überlegung aus, daß die Schleifleistung beziehungsweise das Schleifverhalten eines Schleifmittels auch stark von der Form des einzelnen Schleifkorns und der Ausbildung bzw. Schärfe der Schneidkanten abhängen. Ein weitestgehend kubisches Korn mit gut ausgeprägten Schneidkanten führt dabei zu den besten Ergebnissen.

In diesem Sinne definiert die Erfindung den Begriff des Kornformfaktors dahingehend, daß ein Kornformfaktor von 1 ein ideal kubisches Schleifkorn beschreibt. In diesem Fall ist das Verhältnis der Diagonalen einer der Kornprojektion flächengleichen Ellipse gleich 1 (Kreis). Da dieser Wert rein theoretisch ist, strebt die Erfindung eine möglichst dichte Annäherung an den Idealwert an, weshalb die einzelnen Körner des Schleifmittels einen Kornformfaktor größer 0,6 aufweisen sollen.

Überraschend wurde nun festgestellt, daß sich ein Schleifmittel auf Basis Korund mit einem Kornformfaktor größer 0,6 mit folgenden einfachen Schritten herstellen läßt:
- eine Al₂O₃-haltige Ausgangskomponente mit einem Al₂O₃-Gehalt größer 98 Gew.-% wird kontinuierlich oder chargenweise in einen Elektro-Lichtbogenofen gegeben und durch den Lichtbogen dort aufgeschmolzen,
- die Zugabemenge pro Zeiteinheit der Ausgangskomponente und die Ofenleistung werden dabei so gewählt, daß ein im Schmelzaggregat ausgebildeter Schmelzensumpf während der gesamten Ofenreise (bis zur Entnahme des erstarrten Korund-Gießblocks) maximal 200 mm beträgt,
- der erstarrte Korund-Block wird nach dem Abschalten des Ofens entnommen und auf die gewünschte Kornfraktion zerkleinert.

Der wesentliche Erfindungsgedanke besteht darin, den Schmelzprozeß beim Einschmelzen der Ausgangskomponente so zu steuern, daß stets ein möglichst kleiner (flacher) Schmelzensumpf ausgebildet wird oder anders ausgedrückt, daß in jeder Phase des Schmelzvorgangs eine möglichst geringe Menge Material in schmelzflüssiger Phase vorliegt.

Auf diese Weise wird es möglich, eine Vielzahl freier Kristallisationskeime zur Verfügung zu stellen, die die Ausbildung einer Makrostruktur im Korundblock im erfindungsgemäßen Sinne fördern. Die Größe der einzelnen Kristalle ist innerhalb gewisser Grenzen durch die Höhe des Schmelzbades (Schmelzsumpfes) und die Größe des erstarrten Schmelzblocks steuerbar.

Das Verfahren wird in einem Elektro-Lichtbogenofen ausgeführt.

In der GB-A 776,435 wird die Herstellung eines Schleifmittels beschrieben, bei dem als Heizquelle anstelle eines Elektro-Lichtbogenofens der Widerstand einer dünnen Schmelzschicht benutzt wird. Dazu ragen die Elektroden in diese Schmelzschicht und verschleißen stark.

Um den Temperaturgradienten zwischen der Schmelzphase und dem darunter befindlichen (erstarrten) Korundblock zu erhöhen, ist es von Vorteil, das Verfahren so zu führen, daß das Schmelzaggregat wand- und/oder bodenseitig gekühlt wird, zum Beispiel mit Wasser.

Auf diese Weise läßt sich die Höhe des Schmelzensumpfes auf ein verfahrenstechnisches Minimum begrenzen. Dabei gilt erfindungsgemäß: je kleiner der Schmelzensumpf, um so höher ist der Anteil an erreichbarem Schleifkorn mit einem dem Wert 1 angenäherten Kornformfaktor.

Nach einer Ausführungsform ist die Höhe des Schmelzensumpfes deshalb auf 100 mm, nach einer weiter bevorzugten Ausführungsform auf 50 mm begrenzt.

Das erfindungsgemäße Verfahren läßt sich grundsätzlich mit einem konventionellen Elektro-Lichtbogenofen ausführen. Konkret unterscheidet sich das Verfahren dann von einem bekannten Schmelzverfahren, daß der Ofen mit verminderter Ofenleistung und vorzugsweise mit Kühlung des Ofenbodens gefahren wird, um die Höhe des Schmelzensumpfes soweit wie möglich zu minimieren.

Durch die erfindungsgemäße Verfahrensführung wird die Makrostruktur im erstarrten Korundblock so eingestellt, daß es bei der anschließenden Zerkleinerung mit geringem Mahlaufwand zur Ausbildung nahezu ideal kubischer Schleifkörner kommt, deren Schneidkanten nur unwesentlich oder gar nicht gebrochen sind. Der geringe Mahlaufwand gewährleistet weiters eine erhöhte Ausbringung an verwertbarem Schleifkorn.

Die Verwendung einer alkaliarmen Tonerde als Ausgangsmaterial führt zu besonders günstigen Ergebnissen, da die Ausbildung von -Al₂O₃, einer schleiftechnisch minderwertigeren Modifikation, weitestgehend unterbunden wird. Der Alkaliengehalt sollte kleiner 0,1 Gew.-% sein.

Dagegen lassen sich die Ergebnisse durch Zusätze wie Oxiden der 2. bis 6. Gruppe des Periodensystems, insbesondere TiO₂ und Cr₂O₃ weiter optimieren.

Die Zerkleinerung kann auf an sich bekannte Art und Weise erfolgen, zum Beispiel mit Hilfe von Backenbrechern oder Walzenbrechern. Je nach Verfahrensführung werden Kristalle unterschiedlicher Größe ausgebildet. Nach der Zerkleinerung läßt sich so zum Beispiel ein Korn 36-Schleifmittel (FEPA-Norm) mit einem Schüttgewicht von 1,7 bis 2,0 g/cm³ und einem Kornformfaktor von über 0,7, ohne weitere Kornformbehandlung herstellen.

Zur Durchführung des Verfahrens kann ein Elektro-Lichtbogenofen verwendet werden, der einen gekühlten Boden- und/oder Wandbereich sowie eine Schutzplatte auf dem Boden beziehungsweise Wandbereich aufweist. Wie oben dargestellt, soll die Kühlung des Ofenbodens zur Erhöhung des Temperaturgradienten zwischen Schmelze und erstarrtem Gießblock beitragen. Die Schutzplatte dient als Sicherheit zur Trennung von Ofenboden und Gießblock (Korundblock).

Die Kühlung der Ofenabschnitte kann zum Beispiel mit Wasser erfolgen.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert.

500 kg alkaliarme -Tonerde mit einem Na₂O-Gehalt von 0,08 Gew.-% wird in Mischung mit 1,5 kg Titandioxid und 0,75 kg Chromoxid als Ausgangskomponente bereitgestellt. Das Material wird kontinuierlich in einen elektrischen Lichtbogenofen gegeben. Als Ofengefäß dient eine sogenannte Higgins-Ofenwanne mit außenseitig wassergekühltem Boden. Zum Schutz des gekühlten Bodens ist eine Graphitplatte auf dem Boden angeordnet, auf der wiederum grobgebrochener Edelkorund aufgelegt ist, der beim anfänglichen Einschmelzen der Ausgangskomponente die Trennung von Schmelze und Boden sicherstellen soll.

Die Zugabemenge der Ausgangskomponente und die Ofenleistung werden so gewählt, daß zu jedem Zeitpunkt die Höhe des Schmelzensumpfes (zwischen den Elektroden) maximal 100 mm beträgt. Aufgrund verbesserter Wärmeabfuhr läßt sich die Höhe des Schmelzensumpfes dabei zu Beginn leichter auf kleinere Werte einstellen als gegen Ende der Ofenreise.

Nach Zugabe der kompletten Charge wird der Ofen abgeschaltet. Nachdem auch die letzte Schmelzphase erstarrt ist, wird der Korund-Block aus dem Ofen entnommen und über Backen- und Walzenbrecher gebrochen und standardisiert zu Korn 46 (FEPA-Norm) vermahlen.

Das vom erhaltenen Korn ermittelte Schüttgewicht nach FEPA-Norm ergibt einen Wert von 1,82 g/cm³ und einen Kornformfaktor von 0,75. Die Zusammensetzung des Schleifkorns ist wie folgt (Angaben in Gew.-%)
0,31 % TiO₂
0,15 % Cr₂O₃
0,08 % Na₂O
Rest Al₂O₃.

Aus diesem Material werden danach keramisch gebundene Schleifscheiben mit den Abmessungen 225/25/50,8 mm gefertigt.

In den nachfolgenden Diagrammen 1, 2 und 3 sind jeweils der Verschleiß des Scheibenradius gegen die Zustellung (in mm/Hub) dargestellt. In allen Fällen beträgt die Scheibengeschwindigkeit circa 25 m/s und die Tischgeschwindigkeit circa 20 m/min. Dabei sind die Meßergebnisse unter Verwendung einer Schleifscheibe mit erfindungsgemäß hergestelltem Schleifkorn als Beispiel 2 aufgetragen.

Die Vergleichsprobe betrifft eine Schleifscheibe unter Verwendung von im Handel erhältlichen Einkristall-Korundkörnern der Körnung 46 (nach FEPA-Norm). Beispiel 1 zeigt die Meßwerte an einer Schleifscheibe mit einem nach konventioneller Herstellungs-/Einschmelztechnik erhaltenen und aufbereiteten Korns 46 (nach FEPA-Norm) gleicher chemischer Zusammensetzung wie Beispiel 2.

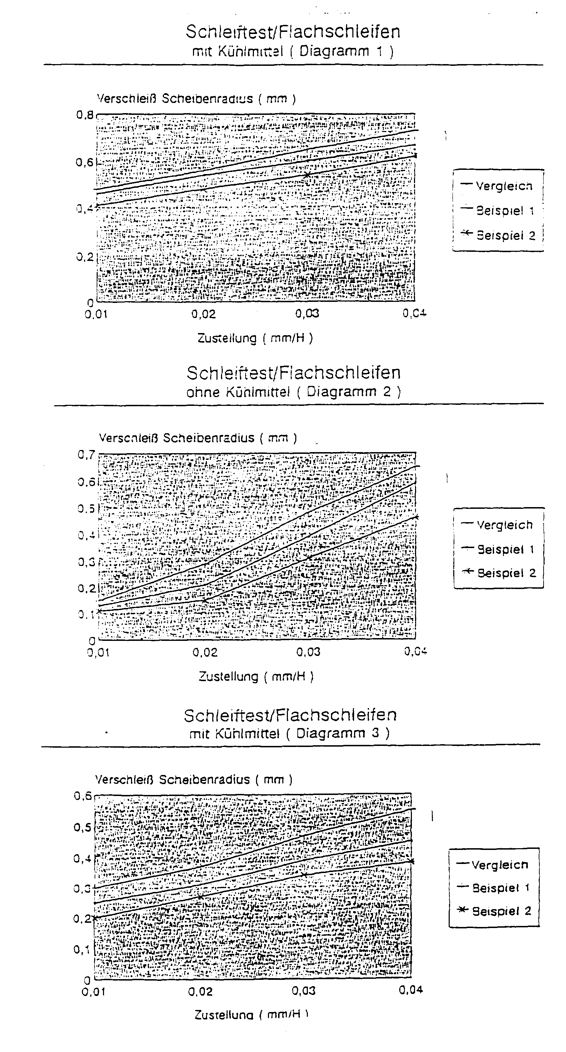

Es ist deutlich zu erkennen, daß in allen Fällen die erfindungsmäßen Schleifmittel zu deutlich besseren Schleifleistungen (geringerem Scheibenverschleiß) führen, und zwar unabhängig davon, ob der Schleiftest mit Kühlmittel (Diagramm 1) oder ohne Kühlmittel (Diagramm 2) durchgeführt wird.

Die Vorteile des erfindungsgemäßen Schleifmittels sind auch unabhängig von der Art des zu schleifenden Werkstoffs, wie ein Vergleich der Diagramme 1 und 2 mit dem Diagramm 3 zeigt. Im Falle der Diagramme 1, 2 wurde ein Stahl der Qualität S 6-5-2 (DM 05); 13343; HRC 64 und im Fall des Diagramms 3 ein Stahl der Qualität 90MnCrV8 bearbeitet.

## Patentansprüche

1. Verfahren zur Herstellung eines Schleifmittels auf Basis Korund mit einem Kornformfaktor, errechnet als Verhältnis der Diagonalen einer der Kornprojektion flächengleichen Ellipse, größer 0,6 mit folgenden Schritten:
1.1 eine Al₂O₃-haltige Ausgangskomponente mit einem Al₂O₃-Gehalt > 98 Gew.-% wird kontinuierlich oder chargenweise in einen Elektro-Lichtbogenofen gegeben und durch den Lichtbogen dort aufgeschmolzen,
1.2 die Zugabemenge pro Zeiteinheit der Ausgangskomponente und die Ofenleistung werden dabei so gewählt, daß ein im Elektro-Lichtbogenofen ausgebildeter Schmelzensumpf während der gesamten Ofenreise maximal 200 mm beträgt,
1.3 der erstarrte Korund-Block wird nach dem Abschalten des Ofens entnommen und auf die gewünschte Kornfraktion zerkleinert.

2. Verfahren nach Anspruch 1 mit der Maßgabe, daß die Höhe des Schmelzensumpfes auf 100 mm begrenzt wird.

3. Verfahren nach Anspruch 2 mit der Maßgabe, daß die Höhe des Schmelzensumpfes auf 50 mm begrenzt wird.

4. Verfahren nach einem der Ansprüche 1 bis 3 mit der Maßgabe, daß die Al₂O₃-haltige Ausgangskomponente einen Alkaliengehalt von weniger als 0,1 Gew.-% aufweist.

5. Verfahren nach einem der Ansprüche 1 bis 4 mit der Maßgabe, daß die Al₂O₃-haltige Ausgangskomponente in einem wand- und/oder bodenseitig gekühlten Schmelzaggregat aufgeschmolzen wird.

6. Verfahren nach einem der Ansprüche 1 bis 5 mit der Maßgabe, daß vor der ersten Aufgabe der Al₂O₃-haltige Ausgangskomponente eine Trennschicht auf den Boden des Schmelzgefäßes vorgelegt wird.

7. Verfahren nach Anspruch 6 mit der Maßgabe, daß als Trennschicht eine grobstückige Korundschicht vorgelegt wird.

8. Verfahren nach einem der Ansprüche 1 bis 7, bei dem eine Al₂O₃-haltige Ausgangskomponente mit bis zu 3,0 Gew.-% Zusätzen von Oxiden der Gruppen 2 bis 6 des Periodensystems der Elemente eingesetzt wird.

9. Verfahren nach Anspruch 8, bei dem als Zusätze TiO₂ und/oder Cr₂O₃ eingesetzt werden.

10. Verfahren nach einem der Ansprüche 1 bis 9, wobei der Elektro-Lichtbogenofen einen außenseitig gekühlten Wand- und/oder Bodenabschnitt sowie eine Schutzplatte auf dem Boden aufweist.

11. Verfahren nach Anspruch 10, bei dem der Wand- und/oder Bodenbereich wassergekühlt werden.

12. Verfahren nach Anspruch 10 oder 11, bei dem als Schutzplatte eine Graphitplatte eingesetzt wird.

## Claims

1. Process for preparing an abrasive based on corundum with a grain shape factor, being calculated as relation of the diagonals of an ellipse equal in area to the grain projection, exceeding 0.6, comprising the following steps:
1.1. an Al₂O₃-containing starting component with an Al₂O₃ content of >98 wt.% is charged continuously or batchwise into an electric arc furnace and is melted there by the arc,
1.2. the amount of the starting component charged in per unit of time and the furnace capacity are selected to be such that a melt sump formed in the electric arc furnace will never exceed a maximum of 200 mm during the entire furnace campaign,
1.3. the solidified corundum ingot is subsequently removed after the switch-off of the furnace and reduced to the desired grain size.

2. Process in accordance with claim 1, provided that the height of the melt sump is limited to 100 mm.

3. Process in accordance with claim 2, provided that the height of the melt sump is limited to 50 mm.

4. Process in accordance with any of the claims 1 to 3, provided that the Al₂O₃-containing starting component has an alkali content of less than 0.1 wt.%.

5. Process in accordance with any of the claims 1 to 4, provided that the Al₂O₃-containing starting component is melted in a melting unit cooled on the wall and/or bottom side.

6. Process in accordance with any of the claims 1 to 5, provided that a separating layer is placed on the bottom of the melting vessel before the Al₂O₃-containing starting component is charged in.

7. Process in accordance with claim 6, provided that a corundum layer consisting of coarse lumps is charged in as the separating layer.

8. Process in accordance with any of the claims 1 to 7, in which an Al₂O₃-containing starting component containing up to 3.0 wt.% of oxides of groups 2-6 of the Periodic Table of Elements as additives is used.

9. Process in accordance with claim 8, in which TiO₂ and/or Cr₂O₃ are used as additives.

10. Process in accordance with any of the claims 1 to 9, in which the electric arc furnace has a wall and/or bottom section cooled on the outside, as well as a protective plate on the bottom.

11. Process in accordance with claim 10, in which the wall and/or bottom area is water-cooled.

12. Process in accordance with claim 10 or 11, in which a graphite plate is used as the protective plate.

## Revendications

1. Procédé de préparation d'un abrasif à base de corindon avec un facteur de granulométrie, calculé comme le rapport entre les diagonales d'une ellipse dont la surface est égale à la projection des grains, supérieur à 0,6, caractérisé en ce qu'un composant de départ contenant Al₂O₃ avec une teneur en Al₂O₃ supérieure à 98 % en poids, alimente de manière continue ou discontinue un four à arc électrique et y est fondu par l'arc électrique, en ce que la quantité du composant de départ fourni par unité de temps et la performance du four sont choisies de telle sorte qu'un bassin de fusion formé dans le four à arc électrique s'élève au maximum à 200 mm pendant le cycle total de fusion dans le four, et en ce que le bloc de corindon solidifié est retiré une fois le four éteint, et fractionné selon la taille de grains souhaitée.

2. Procédé selon la revendication 1, caractérisé en ce que la hauteur du bassin de fusion est limitée à 100 mm.

3. Procédé selon la revendication 2, caractérisé en ce que la hauteur du bassin de fusion est limitée à 50 mm.

4. Procédé selon l'une quelconque des revendications 1 à 3, caractérisé en ce que le composant contenant Al₂O₃ présente une teneur en alcalis inférieure à 0,1 % en poids.

5. Procédé selon l'une quelconque des revendications 1 à 4, caractérisé en ce que le composant de départ contenant Al₂O₃ est fondu dans un agrégat de fusion refroidi par le bas et/ou par les parois.

6. Procédé selon l'une quelconque des revendications 1 à 5, caractérisé en ce qu'avant d'effectuer la première charge du composant contenant Al₂O₃, on dépose au préalable une couche de séparation sur le fond du réservoir de fusion.

7. Procédé selon la revendication 6, caractérisé en ce qu'on dépose au préalable une couche de gros morceaux de corindon en tant que couche de séparation.

8. Procédé selon l'une quelconque des revendications 1 à 7, caractérisé en ce qu'on introduit un composant de départ contenant Al₂O₃ additionné d'oxydes des groupes 2 à 6 du système périodique des éléments, dans une proportion allant jusqu'à 3,0 % en poids.

9. Procédé selon la revendication 8, caractérisé en ce qu'on introduit comme additifs du TiO₂ et/ou du Cr₂O₃.

10. Procédé selon l'une quelconque des revendications 1 à 9, caractérisé en ce que le four à arc électrique présente une section de paroi et/ou de fond refroidie par l'extérieur ainsi qu'une plaque de protection sur le fond.

11. Procédé selon la revendication 10, caractérisé en ce que la zone de paroi et/ou de fond est refroidie par de l'eau.

12. Procédé selon la revendication 10 ou 11, caractérisé en ce qu'on introduit une plaque en graphite comme plaque de protection.
